# FASCICULE DE BREVET EUROPEEN

(11) **EP 2 975 682 B1**
(45) Date de publication et mention de la délivrance du brevet: **21.06.2017**
(21) Numéro de dépôt: 15176323.2
(22) Date de dépôt: 10.07.2015
(51) Int. Cl.: H01M 4/75, H01M 2/16, H01M 2/18, H01M 10/05, H01M 10/0565, H01M 10/058, H01M 4/66, H01M 10/0562

(54) **BATTERIE FILAIRE ET PROCÉDÉ DE RÉALISATION D'UNE BATTERIE FILAIRE**
KABELARTIGE BATTERIE UND HERSTELLUNGSVERFAHREN FÜR EINE KABELARTIGE BATTERIE
CABLE-TYPE BATTERY AND MANUFACTURING PROCESS FOR A CABLE-TYPE BATTERY

(30) Priorité: 16.07.2014 FR 1401588
(43) Date de publication de la demande: 20.01.2016
(73) Titulaire: Commissariat à l'Energie Atomique et aux Energies Alternatives, 75015 Paris (FR)
(72) Inventeur: Porthault, Hélène, 38130 Echirolles (FR); Oukassi, Sami, 38120 Saint-Egrève (FR)
(74) Mandataire: Talbot, Alexandre

(56) Documents cités:
- KR-A- 20070 075 928
- KR-A- 20140 076 516
- US-A1- 2012 009 331
- US-A1- 2012 015 239
- US-A1- 2014 170 456

## Description

### Domaine technique de l'invention

L'invention est relative à une batterie filaire et à son procédé de réalisation.

### État de la technique

Depuis quelques années, les besoins en énergie se sont multipliés et de nombreuses recherches sont menées pour, non seulement, améliorer les performances des batteries mais aussi pour optimiser leur architecture, et en particulier pour les miniaturiser. La miniaturisation des batteries représente un enjeu majeur, notamment pour des applications dans l'électronique dite grand public comme le marché des téléphones portables, des tablettes, etc. Récemment, une nouvelle famille de batterie est apparue : les batteries sous forme de fils, aussi appelées batteries filaires. Ce nouveau type de batterie devrait permettre de répondre aux besoins croissants de miniaturisation et de flexibilité.

Différentes architectures ont été proposées. La première est une architecture coaxiale comme présentée dans les documents WO 03/023880 et US 2014/0011065. L'architecture est organisée autour d'un collecteur de courant central sur lequel sont déposées différentes couches successives pour former la batterie : une première électrode élaborée à partir d'un premier matériau, un électrolyte, une seconde électrode élaborée à partir d'un second matériau, un second collecteur de courant.

Un autre type d'architecture est décrit dans le document US 2014/0011065 (figure 1) : la batterie filaire comporte plusieurs collecteurs de courant internes 410 sous la forme de fil, chaque collecteur interne étant recouvert par un matériau d'électrode 420. Les électrodes ainsi obtenues sont disposées parallèlement les unes aux autres puis englobées dans une couche dite de séparation 430. Cette couche permet d'éviter les court-circuits entre les électrodes. Une autre couche de matériau d'électrode 440 est déposée sur la surface externe de la couche de séparation 430. Finalement, un collecteur de courant externe 450 est déposé sur l'ensemble.
Alternativement, les électrodes internes peuvent aussi être enroulées sous la forme de spirales (« Cable-type Flexible Lithium ion Battery Based on Hollow multi-Helix Electrodes », Adv. Mater. 2012, 24, 5192-5197). La spirale présente un espace vide en son milieu, ce qui permet d'améliorer la flexibilité de l'ensemble. L'espace vide peut être rempli par l'électrolyte.
Cependant, ces architectures, avec des électrodes externes, ne permettent pas d'obtenir une grande liberté sur l'équilibrage entre les deux matériaux d'électrode.
Un autre type d'architecture, sans électrode externe, est décrit dans le document US 2012/0009331, et est représenté à la figure 2. Les matériaux d'anode 111 et de cathode 121 sont déposés sur des fils métalliques distincts 120 et 110 afin de former des électrodes. Les électrodes sont ensuite enrobées dans la gaine d'électrolyte.
Afin d'assurer l'isolation électrique entre les fils, les électrodes d'une même polarité sont recouvertes, en plus, individuellement d'une couche d'électrolyte 131. Celle-ci permet d'assurer à la fois l'isolation électrique et la conductivité ionique entre les matériaux d'électrode. Tous les fils sont ensuite englobés dans une même gaine d'électrolyte 132 pour former la batterie filaire finale. Une batterie filaire ayant une architecture similaire est également décrite dans le document US 2012/0015239.

Même si une telle structure permet d'améliorer l'équilibrage entre les matériaux d'électrode, la structure ne permet pas d'assurer l'absence de courts-circuits lors de l'assemblage des fils. Ceux-ci ne peuvent donc pas être serrés de façon importante. Cette structure n'est de ce fait pas encore suffisamment compacte pour obtenir, à la fois, une bonne miniaturisation et, en même temps, une forte capacité.

### Objet de l'invention

L'invention a pour but de remédier aux inconvénients de l'art antérieur et, en particulier, de proposer une batterie filaire présentant une meilleure tenue aux contraintes mécaniques, principalement en compression et en flexion, en se préservant des courts-circuits.

Cet objet est atteint par une batterie filaire comprenant :
- au moins un premier brin filaire d'un premier type de polarité, comprenant un premier collecteur de courant,
- au moins un deuxième brin filaire d'un deuxième type de polarité, comprenant un deuxième collecteur de courant, le deuxième type de polarité étant opposé au premier type de polarité,
- une couche d'électrolyte dans laquelle sont disposés le premier brin filaire et le deuxième brin filaire, la couche d'électrolyte étant ioniquement conductrice et électriquement isolante, de sorte que le premier brin filaire soit connecté ioniquement au deuxième brin filaire.
Le premier brin filaire est revêtu d'au moins un espaceur, l'espaceur étant électriquement isolant, l'espaceur étant configuré pour éviter un contact direct entre le premier brin filaire et le deuxième brin filaire de polarité opposée.
La résistance mécanique du matériau formant l'espaceur est supérieure à la résistance mécanique du matériau formant la couche d'électrolyte.

Cet objet est également atteint par un procédé de réalisation d'une batterie filaire comprenant les étapes successives suivantes :
- fournir au moins un premier brin filaire d'un premier type de polarité, et au moins un deuxième brin filaire d'un deuxième type de polarité, le deuxième type de polarité étant opposé au premier type de polarité,
- disposer le premier brin filaire et le deuxième brin filaire, dans une couche d'électrolyte, ioniquement conductrice et électriquement isolante, le premier brin filaire étant connecté ioniquement au deuxième brin filaire.
Le premier brin filaire est revêtu d'au moins un espaceur, l'espaceur étant électriquement isolant, l'espaceur étant configuré pour éviter tout contact électrique direct entre le premier brin filaire et le deuxième brin filaire.
La résistance mécanique du matériau formant l'espaceur est supérieure à la résistance mécanique du matériau formant la couche d'électrolyte.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent, de manière schématique, en coupe, des batteries filaires selon l'art antérieur,
- les figures 3 à 9 représentent, de manière schématique, en coupe, des batteries filaires selon différents modes de réalisation de l'invention.

### Description d'un mode de réalisation préférentiel de l'invention

La batterie sous forme de fil, ou batterie filaire 1, comprend :
- au moins un premier brin filaire 2 d'un premier type de polarité, comprenant un premier collecteur de courant,
- au moins un deuxième brin filaire 3 d'un deuxième type de polarité comprenant un deuxième collecteur de courant, le deuxième type de polarité étant opposé au premier type de polarité,
- une gaine ou couche d'électrolyte 4 dans laquelle sont disposés le premier brin filaire 2 et le deuxième brin filaire 3, ladite couche d'électrolyte étant conductrice des ions et électriquement isolante, de sorte que le premier brin filaire 2 soit connecté ioniquement au deuxième brin filaire 3.

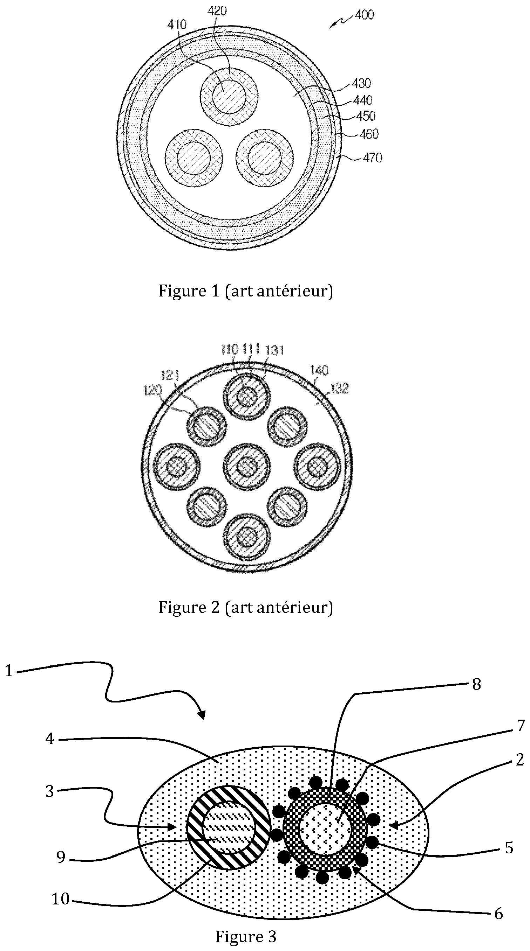

Comme illustré à la figure 3, le premier brin 2 de la batterie filaire 1, selon l'invention, est, en plus, revêtu d'au moins un espaceur 5.

L'espaceur 5 est configuré pour éviter un contact direct entre le premier brin 2 et le deuxième brin 3.
L'espaceur 5 permet de maintenir un espacement minimal entre le premier brin 2 et le deuxième brin 3.
Préférentiellement, l'espaceur 5 a une épaisseur comprise entre 10n et 10*µ*m.

L'espaceur 5 est électriquement isolant pour éviter tout contact électrique entre le premier brin 2 et le deuxième brin 3, de polarités opposées, de manière à éviter les court-circuits entre les deux brins.

Préférentiellement, l'espaceur 5 est ioniquement conducteur, ce qui permet d'accroître les échanges ioniques entre le premier brin 2 et le deuxième brin et donc d'améliorer les performances de la batterie.
L'espaceur 5 permet d'éviter un contact direct entre le premier brin 2 et le deuxième brin 3 tout en permettant une conduction ionique entre ces brins.

Le matériau formant l'espaceur 5 est différent de celui formant la couche d'électrolyte 4.

Préférentiellement, l'espaceur 5 est en céramique.
Le matériau formant l'espaceur 5 est, préférentiellement, choisi parmi LiₓAl_{y}Ge_{z}(PO₄)₃ (LAGP), LiₓAl_{y}Ti_{z}(PO₄)₃ (LATP), LiₓLa_{y}TiO_{z} (LLTO), Li₃PO₄, oxynitrure de lithium et de phosphore (LiPON), Al₂O₃ sous forme nanométrique par exemple.

Selon un autre mode de réalisation, l'espaceur 5 est en en polymère.

Le matériau polymère formant l'espaceur 5 est choisi parmi le polystyrène (PS), le polyéthylène téréphtalate (PET), le polychlorure de vinyle (PVC), le polytétrafluoroéthylène (PTFE), le polycarbonate (PC), ou le polyméthacrylate de méthyl (PMMA).

Préférentiellement, la résistance mécanique du matériau formant l'espaceur 5 est supérieure à celle du matériau formant la couche d'électrolyte 4.
Par résistance mécanique, on entend la résistance du matériau à une déformation induite par une contrainte mécanique.
La résistance mécanique d'un matériau peut être caractérisée par le module d'Young dudit matériau.
Pour résister aux contraintes mécaniques, on choisit des espaceurs ayant un module d'Young supérieur voire très supérieur à celui de l'électrolyte.
Par supérieur, on entend que le module d'Young de l'espaceur est au moins 100 fois supérieur au module d'Young de la couche d'électrolyte.
Par très supérieur, on entend que le module d'Young de l'espaceur est au moins 1000 fois supérieur au module d'Young de la couche d'électrolyte.

Ainsi, la batterie filaire pourrait être réalisée avec un espaceur en LiPON, présentant un module d'Young de 80GPa, et l'électrolyte pourrait être réalisé à l'aide d'une matrice inorganique de type ionogel à base de silicate, présentant un module d'Young inférieur à 0.001 GPa.

Dans un autre exemple, l'espaceur pourrait être en alumine Al₂O₃, présentant un module d'Young compris entre 380 et 490GPa, et l'électrolyte pourrait être réalisé à l'aide d'une matrice polymère de type polyéthylène ayant un module d'Young compris en 0.2 et 0.7GPa.

Avantageusement la dureté du matériau formant l'espaceur 5 est supérieure à la dureté du matériau formant la couche d'électrolyte 4.
Par dureté supérieure, on entend que l'espaceur 5 est plus dur : il s'oppose à la pénétration de l'autre brin pour éviter un court-circuit. Avantageusement, il résiste mieux aux contraintes de torsion, de cisaillement. L'espaceur 5 présente une bonne tenue mécanique lorsqu'il est sollicité en torsion et/ou en compression par exemple.

L'espaceur 5 présente une très faible déformation mécanique sous la contrainte : une pression importante peut être exercée lors de l'assemblage des brins.
Le domaine d'élasticité de l'espaceur 5 est supérieur à la contrainte appliquée, c'est-à-dire que le matériau formant l'espaceur 5 reste dans son domaine d'élasticité lors de la sollicitation. Le matériau formant l'espaceur 5 présente une limite d'élasticité supérieure à une contrainte appliquée sur celui-ci. Contrairement à une structure classique comprenant des brins recouverts uniquement d'une couche d'électrolyte pour assurer l'isolation électrique, ce type d'architecture permet de mieux résister aux contraintes mécaniques, notamment en compression et/ou en flexion. Les brins peuvent être serrés fortement entre eux, sans risque de déformer, de détériorer l'espaceur. L'espaceur 5 reste dans son domaine d'élasticité. Des structures compactes sont ainsi obtenues tout en limitant considérablement le risque de court-circuit.

Selon un mode de réalisation préférentiel, l'espaceur 5 ioniquement conducteur et électriquement isolant est un film continu, recouvrant totalement la surface du premier brin 2. L'espaceur 5 permet les échanges ioniques entre le premier brin 2 et la couche d'électrolyte 4.

Préférentiellement, le film mince recouvrant le premier brin 2 est muni au moins d'une ouverture 6 traversante, notamment lorsqu'il n'est pas conducteur ionique, pour permettre le contact de la couche électrolytique avec le premier brin 2 et les échanges ioniques entre les brins de polarité opposée. Préférentiellement, le film mince est pourvu d'une pluralité d'ouvertures 6 traversantes et/ou le film présente des discontinuités.

Selon un mode de réalisation préférentiel, le premier brin 2 est revêtu d'une pluralité d'espaceurs 5 de manière à former une couche d'espaceurs 5.

Les espaceurs 5 sont, avantageusement, disposés sur l'ensemble du premier brin 2, i.e. sur toute la longueur et sur toute la circonférence de la surface extérieure du premier brin 2, ce qui permet de maintenir un espacement minimal entre le premier brin 2 et le deuxième 3 en tout point du premier brin 2.

Préférentiellement, la couche d'espaceurs 5 est munie au moins d'une ouverture 6 traversante, laissant accessible au moins une partie de la surface extérieure du premier brin 2. L'ouverture 6 est, avantageusement, remplie par l'électrolyte. Le premier brin 2 est en contact direct avec la couche d'électrolyte 4 et l'espaceur 5.
Le trou traversant permet un contact direct le premier brin 2 et l'électrolyte, ce qui améliore les performances de la batterie.

Préférentiellement, la couche d'espaceurs 5 présente plusieurs ouvertures 6 traversantes, à la fois sur le périmètre et sur la longueur du premier brin 2.
Les ouvertures 6 sont, avantageusement, réparties de manière homogène sur l'ensemble de la surface du premier brin 2 pour permettre les échanges ioniques sur l'ensemble de la longueur du brin.

Selon un mode de réalisation préférentiel, représenté sur la figure 3, la couche d'espaceurs 5 est une couche de particules, les particules étant espacées les unes des autres de manière à former des ouvertures 6. Les particules sont dissociées mécaniquement les unes des autres.
Les particules forment les espaceurs 5.
Les espaces entre les particules forment les ouvertures 6 traversantes de la couche d'espaceurs.
Préférentiellement, le diamètre des particules peut varier de 10nm à 10*µ*m, selon l'espacement final souhaité entre les brins de polarité opposée.

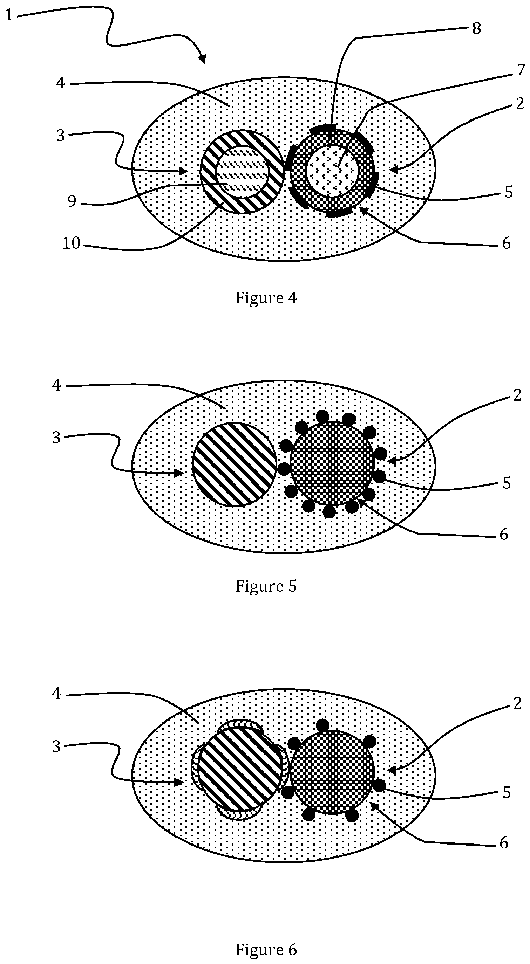

Selon un autre mode de réalisation, et comme représenté sur la figure 4, la couche d'espaceurs 5 est formé d'une pluralité d'ilots, aussi appelés plots, espacés les uns des autres par les ouvertures 6, de manière à laisser accessible par l'électrolyte une partie de la surface extérieure du premier brin 2. Les ilots de matériau du film mince forment les espaceurs 5.
Les espaces entre les ilots forment les ouvertures 6 traversantes de la couche d'espaceurs.

L'utilisation d'une couche d'espaceurs 5 discontinue, et formée par une pluralité de plots ou de particules distincts, permet d'améliorer les caractéristiques de flexion du brin, de manière à limiter les risques de délamination de la couche d'espaceurs 5 par rapport au brin 2 risquant d'induire des courts-circuits.

Les espaces entre les plots ou entre les particules sont remplis par la couche d'électrolyte 4 pour améliorer les échanges ioniques et donc les performances de la batterie.

La couche d'électrolyte 4 est disposée de façon à séparer le premier brin du deuxième brin : elle est disposée entre les deux brins. Le premier brin 2 est connecté ioniquement au deuxième brin 3, via la couche d'électrolyte 4 ioniquement conductrice.
Préférentiellement, la couche d'électrolyte 4 enrobe le premier brin 2 et le deuxième brin 3 : le premier brin et le deuxième brin sont, avantageusement, noyés dans la couche d'électrolyte 4. La couche d'électrolyte 4 forme une gaine d'électrolyte autour des deux brins. Elle forme un étui protégeant, à la fois, les brins et, en même temps, assurant la conduction ionique entre les brins.
Les brins sont positionnés au sein de la batterie filaire.

Le matériau de la couche d'électrolyte 4 doit être isolant électronique et conducteur ionique.
Il doit présenter, avantageusement, de bonnes propriétés de flexibilité pour conférer de bonnes propriétés mécaniques à la batterie filaire. Avantageusement, la couche d'électrolyte 4 est en contact avec au moins une partie de la surface extérieure de chaque brin afin de former la jonction ionique entre lesdits brins.

L'électrolyte 4 est, avantageusement, un électrolyte solide.
Avantageusement, l'électrolyte 4 est un électrolyte de type polymère, par exemple de type gel, ou inorganique.
L'électrolyte 4 est, par exemple, formé par une matrice polymère ou inorganique, ladite matrice comportant des pores remplis d'une solution comprenant au moins un sel de lithium ou de sodium, selon le type de batterie désirée.
La matrice donne les propriétés mécaniques au système, et la solution, donne les propriétés électrochimiques au système.

La matrice peut, à titre d'exemple, être un polymère de type oxyde de polyéthylène (PEO), bisphénol A éthoxylate diméthacrylate (BEMA), polyfluorure de vinylidène (PVDF), polyméthacrylate de méthyle (PMMA), polyacrylonitrile (PAN), polyfluorure de vinylidène hexafluoropropylène (PVDF-HFP), ou un matériau inorganique, à base de silice, formé à partir de tétraéthyle orthosilicate (TEOS), de méthyltriméthoxysilane (MTMS), de tétraméthylorthosilicate (TMOS), de triéthoxyvinylsilane (TEVOS) ou d'un mélange de ces alcoxydes de silicium.

Une matrice inorganique est, avantageusement, obtenue par une méthode sol-gel.

Le liquide peut être un solvant classique type carbonate propylène carbonate (PC), diméthyl carbonate (DMC), diéthylcarbonate (DEC), éthylène carbonate(EC), ou encore un liquide ionique de la famille des anions piperidinium, imidazolium, pyrrolidinium, pyridinium ou ammonium, associés aux cations de type bis(trifluoromethanesulfonyl)imide TFSI⁻, bis(fluorosulfonyl)imide FSI⁻, acétate CH₃COO⁻, bis(oxalate)borate B(O₄C₂)₂⁻, bromure Br⁻, chlorure Cl⁻, iodure I⁻, tetrachloroaluminate Cl⁻ :AlCl₂, hexafluorophosphate PF₆⁻, tetrafluoroborate BF₄⁻, dicyanamide N(CN)₂⁻, éthylphosphonate (C₂H₅O)(H)PO₂⁻, methylphosphonate (CH₃O)(H)PO₂⁻, sulfate d'hydrogène HSO₄⁻, methanesulfonate CH₃SO₃⁻, trifluoromethanesulfonate CF₃SO₃⁻.
Il peut aussi s'agir d'un mélange de solvants, d'un mélange de liquides ioniques ou d'un mélange de solvants et liquides ioniques.

Dans le cas d'une batterie au lithium, l'électrolyte conducteur contient au moins un sel de lithium pour former des ions Li⁺.
Le sel de lithium peut être choisi parmi le groupe LiCl, LiBr, LiI, LiClO₄, LiBF₄, LiPF₆, LiAsF₆, LiFSI, LiTFSI, etc. ou être un mélange de ces sels.

Dans le cas d'une batterie au sodium, l'électrolyte conducteur contient au moins un sel de sodium pour former des ions Na⁺.

Selon un mode de réalisation préférentiel, au moins le premier brin 2 ou le deuxième brin 3 est formé d'un fil métallique, recouvert d'un matériau d'électrode. Le fil métallique est configuré pour former un collecteur de courant. Le matériau d'électrode recouvre, avantageusement, la surface extérieure du fil métallique, sur toute la longueur du fil métallique.

Selon un autre mode de réalisation préférentiel, les deux brins 2, 3 sont formés d'un fil métallique recouvert d'un matériau d'électrode.
Le premier brin 2 est formé d'un premier collecteur de courant 7 recouvert d'un premier matériau d'électrode 8.
Le deuxième brin 3 est formé d'un deuxième collecteur de courant 9 recouvert d'un deuxième matériau d'électrode 10.

Les collecteurs de courant 7, 9 sont, préférentiellement, en Cu, Ni, Ti, Al, Au, Ag, Ta, Ba, Cr, W ou un mélange d'au moins deux de ces métaux. Les collecteurs de courant peuvent encore être en acier inoxydable.
Il peut aussi s'agir d'un super-alliage. Par exemple, il peut s'agir d'un super-alliage contenant une grande quantité de nickel et/ou de chrome de la marque Inconel ® ou d'un type similaire.
Le fil métallique, formant le collecteur de courant, a un diamètre pouvant varier du micromètre au millimètre.

Les collecteurs de courant 7, 9 peuvent aussi être des fils de type isolant métallisés, i.e. un coeur isolant recouvert par une gaine métallique. Une couche de matériau d'électrode peut entourer le collecteur de courant. Avantageusement, la couche métallique ne présente pas de fragilité mécanique : il n'y a pas d'apparition de fissure ou de délaminage lors de la flexion et/ou de la torsion de la batterie filaire.

Selon un autre mode de réalisation, le premier brin et/ou le second brin est un collecteur de courant, formé par au moins un fil métallique.

Le collecteur de courant peut jouer à la fois le rôle de collecteur de courant et le rôle d'électrode. Une couche de matériau d'électrode additionnel n'est pas nécessaire.

Préférentiellement, les collecteurs de courant 7, 9 sont sous la forme de fils et présentent une section circulaire. Selon d'autres alternatives, les collecteurs de courant 7, 9 peuvent présenter des sections de géométrie variable, ainsi une section cubique ou hexagonale peut être envisagée.

De même, la surface extérieure du collecteur de courant 7, 9 peut être modifiée afin d'améliorer l'adhésion du matériau d'électrode 8, 10 sur le collecteur de courant 7, 9. Ainsi, elle peut être rendue plus rugueuse ou plus lisse, ou encore, elle peut être fonctionnalisée par exemple grâce au dépôt d'une couche d'accroche.

Le matériau d'électrode 8, 10 est, avantageusement, un matériau électrochimiquement actif vis-à-vis des ions échangés entre le premier brin 2 et le deuxième brin 3.
Préférentiellement, les ions échangés entre le premier brin 2 et le deuxième 3 sont des ions lithium ou sodium.
Le matériau d'électrode est, avantageusement, électrochimiquement actif vis-à-vis des ions lithium ou sodium.

Les matériaux envisagés, dans le cas du lithium, sont les matériaux classiquement utilisés pour les batteries lithium tels que des matériaux d'intercalation du lithium du groupe LiMO tels que LiCoO₂, LiFeO₂, LiNiO₂, LiMn₂O₄, LiMₓMn₂₋ₓO₄ avec 0≤x≤0.5 et M=Ni, Co, Fe, Ti, etc., LiCoPO₄, LiFePO₄, Li₄Ti₅O₁₂, ou encore S, des métaux tels que Si, Sn, Li, Zn, Mg, Cd, Ce, Ni, Fe, Bi, Sb, Co, ainsi que des alliages, des oxydes MeₓO_{y}, des sulfures MeₓS_{y} ou des complexes de ces métaux tels que MF, MF₂ etc.

Les matériaux d'électrode 8, 10 sont choisis de façon à conférer au premier matériau d'électrode 8 un premier type de polarité, et au deuxième matériau d'électrode 10 un deuxième type de polarité. Les polarités inversées, aussi appelées polarités opposées, permettent de former un matériau d'anode et un matériau de cathode.
Le matériau du premier brin 2 peut être un matériau d'anode et le matériau du deuxième brin 3 peut être un matériau de cathode.
Selon un autre mode de réalisation, le matériau du premier brin 2 peut être un matériau de cathode et le matériau du deuxième brin 3 peut être un matériau d'anode.

Le matériau d'électrode 8, 10 a une épaisseur comprise entre 100nm et 100*µ*m. L'épaisseur du matériau, couplée à la longueur du fil du collecteur de courant 7, 9, permet de déterminer la capacité de la batterie.

Selon un autre mode de réalisation préférentiel, et comme représenté à la figure 5, les brins 2, 3 sont uniquement formés d'un matériau conducteur électronique. Ce matériau joue à la fois le rôle de collecteur de courant et de matériau d'électrode.

Selon un mode de réalisation préférentiel, au moins le premier brin ou le deuxième brin est en lithium. Un fil ou brin en lithium peut être directement utilisé comme anode dans le montage d'une batterie filaire au lithium, par exemple.
Selon un autre mode de réalisation, dans le cas d'une batterie au sodium, au moins le premier brin 2 ou le deuxième brin 3 est en sodium.

Selon un autre mode de réalisation, le premier brin 2 ou le deuxième brin 3 est formé d'un collecteur de courant recouvert d'un matériau d'électrode et l'autre brin est formé uniquement d'un matériau conducteur électronique jouant à la fois le rôle de collecteur de courant et de matériau d'électrode.

Avantageusement, la batterie filaire 1 comporte une pluralité de brins de chaque polarité. Le nombre de ces brins dépend notamment de la taille de la batterie et de sa capacité

Le nombre de brins de première polarité et le nombre de brins de deuxième polarité est soit égal, ce qui permet de former des paires de brins anode/cathode, soit différent en fonction de l'équilibrage anode/cathode souhaité.

Les espaceurs 5 sont, avantageusement, disposés sur au moins l'ensemble des brins d'un même type de polarité.

Selon un autre mode de réalisation, le premier brin 2 et le deuxième brin 3 sont chacun revêtus d'au moins un espaceur.
Comme représenté sur la figure 6, les espaceurs sont disposés sur au moins une partie des brins de polarité opposée. Une partie de la surface des premiers 2 et deuxième 3 brins est recouverte d'une couche d'espaceurs de sorte que les brins de polarités opposées ne soient pas directement en contact.

Les espaceurs peuvent également être disposés sur tous les brins quelle que soit leur polarité.

Selon un autre mode de réalisation particulier, les espaceurs 5, préférentiellement sous forme de particules, peuvent aussi être disséminés dans l'ensemble de l'électrolyte 4, pour conférer des propriétés particulières à la batterie (mécaniques, électrochimiques, etc.).

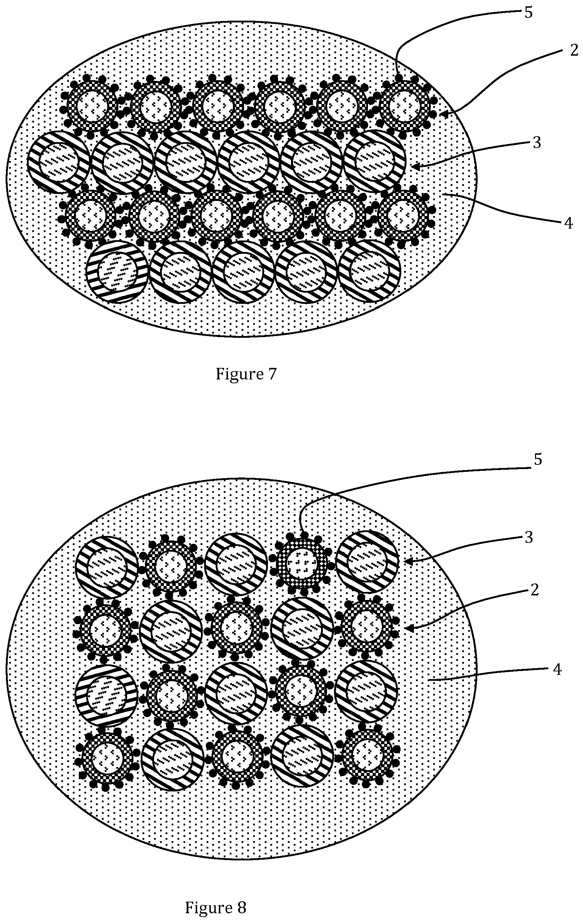

Les figures 7 à 9 représentent différentes architectures possibles pour une batterie filaire 1 comportant plusieurs brins de polarités opposées : un premier groupe de brins d'un premier type de polarité et un deuxième groupe de brins d'un deuxième type de polarité, le deuxième type de polarité étant opposé au premier type de polarité.

Comme représenté sur la figure 7, les brins d'une même polarité peuvent être disposés côte à côte afin de former un premier plan de brins du premier type de polarité. Les brins de polarité opposée sont également disposés côte à côté afin de former un deuxième plan de brins du deuxième type de polarité.
Le premier plan et le deuxième plan sont ensuite empilés. D'autres plans peuvent être ajoutés en alternant les plans de polarité opposée.

Selon un autre mode de réalisation, comme représenté sur la figure 8, chaque brin d'un type de polarité est entouré de quatre brins de polarité opposée afin de former un quadrillage de brins.

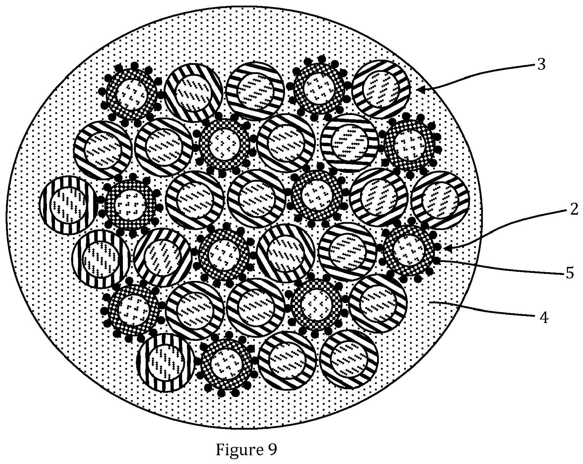

Selon un autre mode de réalisation, comme représenté sur la figure 9, les brins du premier type de polarité sont entourés par 6 brins du deuxième type de polarité. Vu en coupe, les 6 brins du deuxième type de polarité forment un hexagone autour du brin du premier type de polarité.

Cette architecture permet de modifier et d'optimiser l'agencement et le nombre de brins de la batterie filaire afin d'améliorer les performances de la batterie tout en conservant de faibles dimensions de batterie.

La batterie filaire 1 peut être réalisée selon le procédé de réalisation suivant :
- fournir au moins un premier brin filaire 2 d'un premier type de polarité, et au moins un deuxième brin filaire 3 d'un deuxième type de polarité, le deuxième type de polarité étant opposé au premier type de polarité,
- enrober le premier brin filaire 2 et le deuxième brin filaire 3, dans une couche d'électrolyte 4, ioniquement conductrice et électriquement isolante, le premier brin filaire 2 étant connecté ioniquement au deuxième brin filaire 3, via la couche d'électrolyte 4.

Le premier brin filaire 2 est revêtu d'au moins un espaceur 5, l'espaceur 5 étant électriquement isolant, l'espaceur 5 étant configuré pour éviter un contact électrique direct entre le premier brin filaire 2 et le deuxième brin filaire 3.
La résistance mécanique du matériau formant l'espaceur 5 est supérieure à la résistance mécanique du matériau formant la couche d'électrolyte 4.

Pour former les brins 2, 3, le matériau d'électrode 8, 10 peut être déposé sur le collecteur de courant 7, 9 par des techniques classiques de dépôt de couches minces. Il peut s'agir, par exemple, de techniques de dépôts sous vide comme le dépôt physique en phase vapeur « PVD », le dépôt chimique en phase vapeur « CVD », le dépôt chimique en phase vapeur à basse pression « LPCVD », le dépôt chimique en phase vapeur assisté par plasma « PECVD » l'évaporation thermique. Il peut encore s'agir de techniques de dépôt en voie humide comme le trempage-retrait ou « dip-coating », l'enduction, les techniques de spray, l'électro-spray, l'électrodépôt, l'électrodépôt en conditions hydrothermales, ou l'électrophorèse.

L'espaceur 5 est ensuite déposé au moins sur les brins de même polarité. Préférentiellement, les brins de même polarité sont recouverts par une pluralité d'espaceurs 5, de manière à former une couche d'espaceurs 5 sur lesdits brins, les espaceurs 5 étant, avantageusement, sous la forme d'ilots ou de particules.

Dans le cas d'une couche de particules en surface du premier brin 2, la couche d'espaceurs 5 est réalisée par dépôt d'une solution comportant des particules sur le premier brin 2.
En particulier, la couche d'espaceurs 5 est réalisée à partir d'une solution liquide comportant les particules à déposer en suspension dans un solvant. Après dépôt, ou avantageusement au cours du dépôt, le solvant est évaporé et seules les particules persistent à la surface du matériau d'électrode.

Le dépôt peut alors être réalisé par des techniques classiques de dépôt en voie humide telles que l'électrophorèse, le dépôt par trempage-retrait, l'enduction, etc.

Dans le cas d'une couche d'ilots de matériau, le dépôt de la couche d'espaceurs 5 comporte les étapes successives suivantes :
- déposer un film mince sur le premier brin 2,
- réaliser un traitement thermique de manière à faire fondre le matériau formant le film mince,
- faire refroidir le matériau en fusion, le refroidissement permettant de faire coalescer et solidifier des ilots de matériau.
Le film mince est, par exemple, formé par dépôt chimique en phase vapeur (CVD).
Le dépôt est, avantageusement, suivi d'un traitement thermique de fusion sur ladite couche.
Lors du retour à température ambiante, il se forme ainsi des gouttelettes qui coalescent et se solidifient, formant ainsi des ilots de matériaux.
Par température ambiante, on entend une température de l'ordre de 20-25°C. Une couche discontinue est alors obtenue : il s'agit, dans ce mode de réalisation, d'un film mince muni d'ouvertures 6 traversantes.

Les brins 2, 3 de chaque polarité, avec et sans couche d'espaceurs 5, sont ensuite assemblés pour former la batterie filaire 1.
Il peut s'agir d'un assemblage brin-brin, i.e. d'un assemblage comportant uniquement un brin de chaque polarité, ou encore d'un assemblage multibrins où le nombre de brin de chaque polarité est optimisé. L'assemblage comprend un groupe de premiers brins 2 du premier type de polarité et un groupe de deuxièmes brins 3 du deuxième type de polarité.
Préférentiellement, les premiers brins 2 et les deuxièmes brins 3 sont assemblés sous la forme d'une tresse ou d'une torsade de fils. La présence de la couche d'espaceurs 5 permet d'appliquer une tension et/ou flexion importante lors de l'assemblage de brins entre eux et de maitriser les espacements entre les brins pour éviter les court-circuits.

L'ensemble des brins est ensuite enrobé dans une couche d'électrolyte. L'électrolyte, qui est au départ un liquide plus ou moins visqueux, peut être déposé par des techniques de trempage, ou de spray, par exemple.
Selon les composants utilisés, la polymérisation, ou solidification, peut être soit auto-induite, par contact avec l'humidité de l'air par exemple, soit initiée, par un traitement thermique ou par une insolation ultra-violet notamment.
Des additifs peuvent être ajoutés afin d'accélérer ou d'initier le processus de polymérisation. Dans le cas de la polymérisation sous UV, un photo-initiateur peut être utilisé.

La gaine d'électrolyte peut ensuite être recouverte par d'autres éléments. Une couche de protection peut être ajoutée, ou tout autre élément adapté et choisi par l'homme du métier.
Avantageusement, il est possible de traiter thermiquement les matériaux déposés sur la couche d'électrolyte.

La batterie filaire 1 va maintenant être décrite au moyen de l'exemple suivant, donné à titre illustratif et non limitatif. La batterie comporte plusieurs brins 2 du premier type de polarité et plusieurs brins 3 du deuxième type de polarité.

Les collecteurs de courant 7 ont un diamètre de 50*µ*m. Il peut, à titre d'exemple, s'agir de titane ou d'acier inoxydable.
Le matériau d'électrode 8 des brins 2 du premier type de polarité est sous la forme d'une couche LiCoO₂ de 15*µ*m d'épaisseur déposée sur les collecteurs de courant. Ce matériau d'électrode 8 présente une capacité théorique de 69*µ*Ah/cm²/*µ*m.
Des nanoparticules de 500nm sont disposées autour de ces brins afin de former la couche d'espaceurs 5.

Les 3 du deuxième type de polarité, i.e. les de polarité inverse, sont des fils de lithium métallique de 80*µ*m de diamètre.

Dans un premier exemple d'architecture, un brin d'une première polarité et un brin d'une seconde polarité sont associés. Ce type de batterie filaire présente un très faible diamètre, environ 160*µ*m, et peut présenter jusqu'à 20*µ*Ah/cm linéaire de batterie.
Dans un second exemple, le diamètre de la batterie filaire est de 1 mm. Dans cette configuration, environ 60 paires de brins anode/cathode peuvent être associés, ce qui représente une capacité de l'ordre de 1.2mAh/cm linéaire de batterie.

L'architecture permet de serrer fortement les brins entre eux sans risque de générer des courts-circuits. La couche d'espaceurs assure l'isolation électrique entre les brins même sous de fortes contraintes mécaniques nécessaires à la réalisation de la batterie filaire (tressage, torsade, etc.).
La densité de brins et l'équilibrage des matériaux d'électrodes peuvent être facilement optimisés, pour atteindre des capacités linéaires très importantes.

D'autre part, l'épaisseur d'électrolyte est, avantageusement, maintenue constante dans l'ensemble de la batterie ce qui favorise un fonctionnement électrochimique homogène des matériaux d'électrode.

Les batteries filaires sont très compactes et peuvent présenter des diamètres de fils relativement petits, de l'ordre de 100*µ*m. Les batteries filaires sont en plus très flexibles, ce qui permet d'envisager l'intégration de ces batteries dans des textiles intelligents : les batteries filaires peuvent être tissées ou tricotées pour réaliser des textiles fonctionnalisés.

## Revendications

1. Batterie filaire (1) comprenant :
- au moins un premier brin filaire (2) d'un premier type de polarité, comprenant un premier collecteur de courant,
- au moins un deuxième brin filaire (3) d'un deuxième type de polarité, comprenant un deuxième collecteur de courant, le deuxième type de polarité étant opposé au premier type de polarité,
- une couche d'électrolyte (4) dans laquelle sont disposés le premier brin filaire (2) et le deuxième brin filaire (3), la couche d'électrolyte (4) étant ioniquement conductrice et électriquement isolante de sorte que le premier brin (2) soit connecté ioniquement au deuxième brin (3), et dans laquelle le premier brin filaire (2) est revêtu au moins d'un espaceur (5), l'espaceur (5) étant électriquement isolant, l'espaceur (5) étant configuré pour éviter un contact direct entre le premier brin filaire (2) et le deuxième brin filaire (3),
et **caractérisée en ce que** le module de Young du matériau formant l'espaceur (5) est supérieur à celui du matériau formant la couche d'électrolyte (4).

2. Batterie selon la revendication 1, **caractérisée en ce que** le premier brin (2) est en contact direct avec la couche d'électrolyte (4) et l'espaceur (5).

3. Batterie selon l'une des revendications 1 et 2, **caractérisée en ce que** le premier brin (2) et le deuxième brin (3) sont chacun revêtus d'au moins un espaceur.

4. Batterie selon l'une quelconque des revendications 1 à 3, **caractérisée en ce que** l'espaceur (5) est ioniquement conducteur.

5. Batterie selon l'une quelconque des revendications 1 à 4, **caractérisée en ce que** l'espaceur (5) est en céramique.

6. Batterie selon la revendication 5, **caractérisée en ce que** le matériau céramique formant l'espaceur (5) est choisi parmi LiₓAl_{y}Ge_{z}(PO₄)₃(LAGP), LiₓAl_{y}Ti_{z}(PO₄)₃(LATP), LiₓLa_{y}TiO_{z}(LLTO), Li₃PO₄, l'oxynitrure de lithium et de phosphore (LiPON), Al₂O₃.

7. Batterie selon l'une quelconque des revendications 1 à 4, **caractérisée en ce que** l'espaceur (5) est en en polymère.

8. Batterie selon la revendication 7, **caractérisée en ce que** le matériau polymère formant l'espaceur (5) est choisi parmi le polystyrène (PS), le polyéthylène téréphtalate (PET), le polychlorure de vinyle (PVC), le polytétrafluoroéthylène (PTFE), le polycarbonates (PC), ou le polyméthacrylate de méthyl (PMMA).

9. Batterie selon l'une quelconque des revendications 1 à 8, **caractérisée en ce que** l'espaceur (5) a une épaisseur comprise entre 10nm et 10nm.

10. Batterie selon l'une quelconque des revendications 1 à 9, **caractérisée en ce que** l'espaceur (5) est un film mince muni au moins d'une ouverture (6) traversante pour permettre le contact de la couche d'électrolyte avec le premier brin (2).

11. Batterie selon l'une quelconque des revendications 1 à 9, **caractérisée en ce que** le premier brin (2) est recouvert d'une pluralité d'espaceurs (5) de manière à former une couche d'espaceurs (5), les espaceurs étant sous la forme d'ilots ou de particules.

12. Batterie selon la revendication 11, **caractérisée en ce que** la couche de d'espaceurs (5) est une couche discontinue de particules, les particules étant espacées les unes des autres de manière à former des ouvertures (6) pour permettre le contact de la couche d'électrolyte avec le premier brin (2).

13. Batterie selon la revendication 11, **caractérisée en ce que** la couche d'espaceurs (5) est formée d'une pluralité d'ilots espacés les uns des autres (6) pour permettre le contact de la couche d'électrolyte avec le premier brin (2).

14. Batterie selon l'une quelconque des revendications 1 à 13, **caractérisée en ce qu'**au moins le premier brin (2) ou le deuxième brin (3) est formé d'un fil métallique (7), recouvert d'un matériau d'électrode (8).

15. Batterie selon la revendication 14, **caractérisée en ce que** le fil métallique (7) est en Cu, Ni, Ti, Al, Au, Ag, Ta, Ba, Cr, W ou un mélange d'au moins deux de ces métaux ou encore en acier inoxydable ou en super-alliage.

16. Batterie selon l'une des revendications 14 et 15, **caractérisée en ce que** le matériau d'électrode (8) est un matériau électrochimiquement actif vis-à-vis des ions échangés entre le premier brin (2) et le deuxième brin (3).

17. Batterie selon l'une quelconque des revendications 14 à 16, **caractérisée en ce que** le matériau d'électrode (8) a une épaisseur comprise entre 100nm et 100*µ*m.

18. Batterie selon l'une quelconque des revendications 1 à 13, **caractérisée en ce que** le premier brin (2) et/ou le deuxième brin (3) comprennent un coeur isolant recouvert par une gaine métallique formant un collecteur de courant.

19. Batterie selon la revendication 18, **caractérisée en ce que** le collecteur de courant est recouvert par un matériau d'électrode.

20. Batterie selon l'une quelconque des revendications 1 à 13, **caractérisée en ce que** le premier brin (2) et/ou le second brin (3) sont un collecteur de courant, formé par au moins un fil métallique.

21. Batterie selon l'une quelconque des revendications 1 à 13, **caractérisée en ce qu'**au moins le premier brin (2) ou le deuxième brin (3) est en lithium ou en sodium.

22. Batterie selon l'une quelconque des revendications 1 à 21, **caractérisée en ce que** la couche d'électrolyte (4) est formée d'une matrice polymère ou d'une matrice inorganique, ladite matrice comportant des pores remplis d'une solution comprenant au moins un sel de lithium ou de sodium.

23. Batterie selon l'une quelconque des revendications 1 à 22, **caractérisée en ce qu'**elle comporte plusieurs brins du premier type de polarité et/ou plusieurs brins du deuxième type de polarité.

24. Procédé de réalisation d'une batterie filaire (1) comprenant les étapes successives suivantes :
- fournir au moins un premier brin filaire (2) d'un premier type de polarité, et au moins un deuxième brin filaire (3) d'un deuxième type de polarité, le deuxième type de polarité étant opposé au premier type de polarité,
- disposer le premier brin filaire (2) et le deuxième brin filaire (3) dans une gaine ou couche d'électrolyte (4), la couche d'électrolyte (4) étant ioniquement conductrice et électriquement isolante, le premier brin (2) étant connecté ioniquement au deuxième brin (3), et dans lequel le premier brin filaire (2) est revêtu d'au moins un espaceur (5), l'espaceur (5) étant électriquement isolant, l'espaceur (5) étant configuré pour éviter un contact direct entre le premier brin filaire (2) et le deuxième brin filaire (3), le procédé étant **caractérisé en ce que** le module de Young du matériau formant l'espaceur (5) est supérieur à celui du matériau formant la couche d'électrolyte (4).

25. Procédé selon la revendication 24, **caractérisé en ce que** le premier brin (2) et le deuxième brin (3) sont assemblés sous la forme d'une tresse ou d'une torsade.

26. Procédé selon l'une des revendications 24 et 25, **caractérisé en ce que** le premier brin (2) est recouvert d'une pluralité d'espaceurs de manière à former une couche d'espaceurs (5), les espaceurs (5) étant sous la forme d'ilots ou de particules.

27. Procédé selon la revendication 26, **caractérisé en ce que** la couche d'espaceurs (5) est réalisée par dépôt d'une solution comportant des particules sur le premier brin (2).

28. Procédé selon la revendication 27, **caractérisé en ce que** le dépôt de la couche d'espaceurs (5) comporte les étapes successives suivantes :
- déposer un film mince sur le premier brin (2),
- réaliser un traitement thermique de manière à faire fondre le matériau formant le film mince,
- faire refroidir le matériau en fusion, le refroidissement permettant de faire coalescer et solidifier des ilots de matériau.

## Patentansprüche

1. Drahtbatterie (1), umfassend:
- wenigstens einen ersten Drahtstrang (2) eines ersten Polaritätstyps, der einen ersten Stromkollektor umfasst,
- wenigstens einen zweiten Drahtstrang (3) eines zweiten Polaritätstyps, der einen zweiten Stromkollektor umfasst, wobei der zweite Polaritätstyp entgegengesetzt zu dem ersten Polaritätstyp ist,
- eine Elektrolytschicht (4), in der der erste Drahtstrang (2) und der zweite Drahtstrang (3) angeordnet sind, wobei die Elektrolytschicht (4) ionisch leitend und elektrisch isolierend ist, so dass der erste Strang (2) mit dem zweiten Strang (3) ionisch verbunden ist,
und wobei der erste Drahtstrang (2) wenigstens mit einem Abstandhalter (5) überzogen ist, wobei der Abstandhalter (5) elektrisch isolierend ist, wobei der Abstandhalter (5) dazu ausgelegt ist, einen direkten Kontakt zwischen dem ersten Drahtstrang (2) und dem zweiten Drahtstrang (3) zu vermeiden,
und **dadurch gekennzeichnet, dass** der Elastizitätsmodul des Materials, das den Abstandhalter (5) bildet, größer ist als derjenige des Materials, das die Elektrolytschicht (4) bildet.

2. Batterie nach Anspruch 1, **dadurch gekennzeichnet, dass** der erste Strang (2) mit der Elektrolytschicht (4) und dem Abstandhalter (5) in direktem Kontakt ist.

3. Batterie nach einem der Ansprüche 1 und 2, **dadurch gekennzeichnet, dass** der erste Strang (2) und der zweite Strang (3) jeweils mit wenigstens einem Abstandhalter überzogen sind.

4. Batterie nach einem der Ansprüche 1 bis 3, **dadurch gekennzeichnet, dass** der Abstandhalter (5) ionisch leitend ist.

5. Batterie nach einem der Ansprüche 1 bis 4, **dadurch gekennzeichnet, dass** der Abstandhalter (5) aus Keramik besteht.

6. Batterie nach Anspruch 5, **dadurch gekennzeichnet, dass** das den Abstandhalter (5) bildende Keramikmaterial aus LiₓAl_{y}Ge_{z}(PO₄)₃ (LAGP), LiₓAl_{y}Ti_{z}(PO₄)₃ (LATP), LiₓLa_{y}TiO_{z} (LLTO), Li₃PO₄, Lithium- und Phosphoroxinitrid (LiPON), Al₂O₃ ausgewählt ist.

7. Batterie nach einem der Ansprüche 1 bis 4, **dadurch gekennzeichnet, dass** der Abstandhalter (5) aus Polymer besteht.

8. Batterie nach Anspruch 7, **dadurch gekennzeichnet, dass** das polymere Material, welches den Abstandhalter (5) bildet, aus Polystyrol (PS), Polyethylenterephthalat (PET), Polyvinylchlorid (PVC), Polytetrafluorethylen (PTFE), Polycarbonat (PC) oder Polymethylmethacrylat (PMMA) ausgewählt ist.

9. Batterie nach einem der Ansprüche 1 bis 8, **dadurch gekennzeichnet, dass** der Abstandhalter (5) eine Dicke im Bereich zwischen 10 nm und 10 µm aufweist.

10. Batterie nach einem der Ansprüche 1 bis 9, **dadurch gekennzeichnet, dass** der Abstandhalter (5) ein dünner Film ist, der wenigstens mit einer Durchgangsöffnung (6) versehen ist, um den Kontakt der Elektrolytschicht mit dem ersten Strang (2) zu ermöglichen.

11. Batterie nach einem der Ansprüche 1 bis 9, **dadurch gekennzeichnet, dass** der erste Strang (2) mit einer Vielzahl von Abstandhaltern (5) bedeckt ist, um eine Schicht aus Abstandhaltern (5) zu bilden, wobei die Abstandhalter in Form von Inseln oder Partikeln vorliegen.

12. Batterie nach Anspruch 11, **dadurch gekennzeichnet, dass** die Schicht aus Abstandhaltern (5) eine unterbrochene Schicht aus Partikeln ist, wobei die Partikel voneinander beabstandet sind, um Öffnungen (6) zu bilden, um den Kontakt der Elektrolytschicht mit dem ersten Strang (2) zu ermöglichen.

13. Batterie nach Anspruch 11, **dadurch gekennzeichnet, dass** die Schicht aus Abstandhaltern (5) von einer Vielzahl von voneinander beabstandeten Inseln (6) gebildet ist, um den Kontakt der Elektrolytschicht mit dem ersten Strang (2) zu ermöglichen.

14. Batterie nach einem der Ansprüche 1 bis 13, **dadurch gekennzeichnet, dass** wenigstens der erste Strang (2) oder der zweite Strang (3) von einem Metalldraht (7) gebildet ist, der mit einem Elektrodenmaterial (8) überzogen ist.

15. Batterie nach Anspruch 14, **dadurch gekennzeichnet, dass** der Metalldraht (7) aus Cu, Ni, Ti, Al, Au, Ag, Ta, Ba, Cr, W oder einem Gemisch aus wenigstens zwei dieser Metalle oder aber aus rostfreiem Stahl oder aus Superlegierung besteht.

16. Batterie nach einem der Ansprüche 14 und 15, **dadurch gekennzeichnet, dass** das Elektrodenmaterial (8) ein Material ist, das gegenüber Ionen, die zwischen dem ersten Strang (2) und dem zweiten Strang (3) ausgetauscht werden, elektrochemisch aktiv ist.

17. Batterie nach einem der Ansprüche 14 bis 16, **dadurch gekennzeichnet, dass** das Elektrodenmaterial (8) eine Dicke im Bereich zwischen 100 nm und 100 µm aufweist.

18. Batterie nach einem der Ansprüche 1 bis 13, **dadurch gekennzeichnet, dass** der erste Strang (2) und/oder der zweite Strang (3) einen isolierenden Kern umfassen, der mit einem einen Stromkollektor bildenden Metallmantel überzogen ist.

19. Batterie nach Anspruch 18, **dadurch gekennzeichnet, dass** der Stromkollektor mit einem Elektrodenmaterial überzogen ist.

20. Batterie nach einem der Ansprüche 1 bis 13, **dadurch gekennzeichnet, dass** der erste Strang (2) und/oder der zweite Strang (3) ein Stromkollektor sind, der durch wenigstens einen Metalldraht gebildet ist.

21. Batterie nach einem der Ansprüche 1 bis 13, **dadurch gekennzeichnet, dass** wenigstens der erste Strang (2) oder der zweite Strang (3) aus Lithium oder aus Natrium besteht.

22. Batterie nach einem der Ansprüche 1 bis 21, **dadurch gekennzeichnet, dass** die Elektrolytschicht (4) von einer Polymermatrix oder von einer anorganischen Matrix gebildet ist, wobei die Matrix Poren umfasst, die mit einer wenigstens ein Lithium- oder Natriumsalz umfassenden Lösung gefüllt sind.

23. Batterie nach einem der Ansprüche 1 bis 22, **dadurch gekennzeichnet, dass** sie mehrere Stränge des ersten Polaritätstyps und/oder mehrere Stränge des zweiten Polaritätstyps umfasst.

24. Verfahren zur Herstellung einer Drahtbatterie (1), das die folgenden aufeinanderfolgenden Schritte umfasst:
- Bereitstellen wenigstens eines ersten Drahtstrangs (2) eines ersten Polaritätstyps und wenigstens eines zweiten Drahtstrangs (3) eines zweiten Polaritätstyps, wobei der zweite Polaritätstyp entgegengesetzt zu dem ersten Polaritätstyp ist,
- Anordnen des ersten Drahtstrangs (2) und des zweiten Drahtstrangs (3) in einer Elektrolythülle oder -schicht (4), wobei die Elektrolytschicht (4) ionisch leitend und elektrisch isolierend ist, wobei der erste Strang (2) mit dem zweiten Strang (3) ionisch verbunden ist,
und wobei der erste Drahtstrang (2) mit wenigstens einem Abstandhalter (5) überzogen ist, wobei der Abstandhalter (5) elektrisch isolierend ist, wobei der Abstandhalter (5) dazu ausgelegt ist, einen direkten Kontakt zwischen dem ersten Drahtstrang (2) und dem zweiten Drahtstrang (3) zu vermeiden,
wobei das Verfahren **dadurch gekennzeichnet ist, dass** der Elastizitätsmodul des Materials, das den Abstandhalter (5) bildet, größer ist als derjenige des Materials, das die Elektrolytschicht (4) bildet.

25. Verfahren nach Anspruch 24, **dadurch gekennzeichnet, dass** der erste Strang (2) und der zweite Strang (3) in Form eines Geflechts oder einer Verdrillung verbunden sind.

26. Verfahren nach einem der Ansprüche 24 und 25, **dadurch gekennzeichnet, dass** der erste Strang (2) mit einer Vielzahl von Abstandhaltern überzogen ist, um eine Schicht aus Abstandhaltern (5) zu bilden, wobei die Abstandhalter (5) in Form von Inseln oder Partikeln vorliegen.

27. Verfahren nach Anspruch 26, **dadurch gekennzeichnet, dass** die Schicht aus Abstandhaltern (5) durch Abscheiden einer Partikel umfassenden Lösung auf dem ersten Strang (2) hergestellt wird.

28. Verfahren nach Anspruch 27, **dadurch gekennzeichnet, dass** die Abscheidung der Schicht aus Abstandhaltern (5) die folgenden aufeinanderfolgenden Schritte umfasst:
- Abscheiden eines dünnen Films auf dem ersten Strang (2),
- Durchführen einer Wärmebehandlung, um das den dünnen Film bildende Material zu schmelzen,
- Abkühlen der Materialschmelze, wobei das Abkühlen ermöglicht,
Materialinseln zusammenwachsen zu lassen und zu verfestigen.

## Claims

1. A cable-type battery (1) comprising:
- at least a first strand (2) of a first polarity type, comprising a first current collector,
- at least a second strand (3) of a second polarity type, comprising a second current collector, the second polarity type being the opposite of the first polarity type,
- an electrolyte layer (4) in which the first strand (2) and the second strand (3) are arranged, the electrolyte layer (4) being ionically conducting and electrically insulating so that the first strand (2) is ionically connected to the second strand (3), and wherein
the first strand (2) is coated by at least one spacer (5), the spacer (5) being electrically insulating, the spacer (5) being configured to prevent any direct contact between the first strand (2) and the second strand (3),
and **characterized in that** the Young's modulus of the material forming spacer (5) is higher than the Young's modulus forming the electrolyte layer (4).

2. The battery according to claim 1, **characterized in that** the first strand (2) is in direct contact with the electrolyte layer (4) and with the spacer (5).

3. The battery according to any of claims 1 and 2, **characterized in that** the first strand (2) and the second strand (3) are both coated by at least one spacer.

4. The battery according to any of claims 1 to 3, **characterized in that** the spacer (5) is ionically conducting.

5. The battery according to any of claims 1 to 4, **characterized in that** the spacer (5) is made from ceramic.

6. The battery according to claim 5, **characterized in that** the first material forming the spacer (5) is chosen from LiₓAl_{y}Ge_{z}(PO₄)₃ (LAGP), LiₓAl_{y}Ti_{z}(PO₄)₃ (LATP), LiₓLa_{y}TiO_{z} (LLTO), Li₃PO₄, lithium and phosphorus oxynitride (LiPON), Al₂O₃.

7. The battery according to any of claims 1 to 4, **characterized in that** the spacer (5) is a polymer.

8. The battery according to claim 7, **characterized in that** the spacer (5) is chosen from polystyrene (PS), polyethylene terephtalate (PET), polyvinyl chloride (PVC), polytetrafluoroethylene (PTFE), polycarbonates (PC), or polymethyl methacrylate (PMMA).

9. The battery according to any of claims 1 to 8, **characterized in that** the spacer (5) has a thickness comprised between 10nm and 10*µ*m.

10. The battery according to any of claims 1 to 9, **characterized in that** the spacer (5) is a thin film provided with at least one pass-through opening (6) to enable contact of the electrolyte layer with the first strand (2).

11. The battery according to any of claims 1 to 9, **characterized in that** the first strand (2) is covered by a plurality of spacers (5) so as to form a spacer layer (5), the spacers being in the form of islands or of particles.

12. The battery according to claim 11, **characterized in that** the spacer layer (5) is a discontinuous layer of particles, the particles being spaced apart from one another so as to form openings (6) to enable contact of the electrolyte layer with the first strand (2).

13. The battery according to claim 11, **characterized in that** the spacer layer (5) is formed by a plurality of islands spaced apart from one another (6) to enable contact of the electrolyte layer with the first strand (2).

14. The battery according to any of claims 1 to 13, **characterized in that** the first strand (2) or the second strand (3) is formed by a metal wire (7), covered by an electrode material (8).

15. The battery according to claim 14, **characterized in that** the metal wire (7) is made from Cu, Ni, Ti, Al, Au, Ag, Ta, Ba, Cr, W or a mixture of at least two of these metals or from stainless steel or from super-alloy.

16. The battery according to any of claims 14 and 15, **characterized in that** the electrode material (8) is a material that is electrochemically active with respect to ions exchanged between the first strand (2) and the second strand (3).

17. The battery according to any of claims 14 to 16, **characterized in that** the electrode material (8) has a thickness comprised between 100nm and 100*µ*m.

18. The battery according to any of claims 1 to 13, **characterized in that** the first strand (2) and/or the second strand (3) comprise an insulating core covered by a metallic sheath forming the first current collector.

19. The battery according to claim 18, **characterized in that** the current collector is covered by an electrode material.

20. The battery according to any of claims 1 to 13, **characterized in that** the first strand (2) and/or the second strand (3) are a current collector, formed by at least one metal wire.

21. The battery according to any of claims 1 to 13, **characterized in that** at least the first strand (2) or the second strand (3) is made from lithium or from sodium.

22. The battery according to any of claims 1 to 21, **characterized in that** the electrolyte layer (4) is formed by a polymer matrix or by an inorganic matrix, said matrix comprising pores filled by a solution comprising at least one lithium or sodium salt.

23. The battery according to any of claims 1 to 22, **characterized in that** it comprises several strands of the first polarity type and/or several strands of the second polarity type.

24. A method for fabricating a cable-type battery (1) comprising the following successive steps:
- providing at least a first strand (2) of a first polarity type, and at least a second strand (3) of a second polarity type, the second polarity type being the opposite of the first polarity type,
- arranging the first strand (2) and the second strand (3) in a sheath or electrolyte layer (4), the electrolyte layer (4) being ionically conducting and electrically insulating, the first strand (2) being ionically connected to the second strand (3),
and wherein the first strand (2) is coated by at least one spacer (5), the spacer (5) being electrically insulating, the spacer (5) being configured to prevent any direct contact between the first strand (2) and the second strand (3),
the method being **characterized in that** the Young modulus of the material forming the spacer (5) is higher than the Young modulus of the material forming the electrolyte layer (4).

25. The method according to claim 24, **characterized in that** the first strand (2) and the second strand (3) are assembled in the form of a braid or of a twist.

26. The method according to any of claims 24 and 25, **characterized in that** the first strand (2) is covered by a plurality of spacers so as to form a spacer layer (5), the plurality of spacers (5) being in the form of islands or of particles.

27. The method according to claim 26, **characterized in that** the spacer layer (5) is fabricated by deposition of a solution comprising particles on the first strand (2).

28. The method according to claim 27, **characterized in that** deposition of the spacer layer (5) comprises the following successive steps:
- depositing a thin film on the first strand (2),
- performing heat treatment so as to melt a material forming the thin film,
- cooling said molten material, cooling enabling islands of said material to be made to coalesce and solidify.
